(19) Europäisches Patentamt
European Patent Office
Office européen des brevets

(11) **EP 2 685 097 A1**

(12) **EUROPEAN PATENT APPLICATION**
published in accordance with Art. 153(4) EPC

(43) Date of publication:
**15.01.2014 Bulletin 2014/03**

(51) Int Cl.:
**F03D 7/04** $^{(2006.01)}$

(21) Application number: **11853878.4**

(22) Date of filing: **28.12.2011**

(86) International application number:
**PCT/JP2011/080438**

(87) International publication number:
**WO 2012/091104 (05.07.2012 Gazette 2012/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2010 JP 2010294197**

(71) Applicant: **Mitsubishi Heavy Industries, Ltd.**
**Tokyo 108-8215 (JP)**

(72) Inventors:
• **NAKAMURA, Shigeaki**
**Tokyo 108-8215 (JP)**
• **IWASAKI, Kaoru**
**Tokyo 108-8215 (JP)**

(74) Representative: **Intès, Didier Gérard André et al**
**Cabinet Beau de Loménie**
**158, rue de l'Université**
**75340 Paris Cedex 07 (FR)**

(54) **CONSTRUCTION TIME SELECTION DEVICE AND CONSTRUCTION TIME SELECTION METHOD**

(57) An object is to select an appropriate timing for servicing a wind turbine generator (12). In a wind turbine generator system (10), a system managing device (20) determines a servicing timing for replacing or repairing a main component included in the wind turbine generator (12) due to a failure of the main component in accordance with a time point at which the main component may fail, which is predicted on the basis of a temporal change in a detection signal output from a status detector that detects the status of the main component. A servicing planning device (22) selects a servicing timing for the main component on the basis of a servicing suspension rate at which an average wind speed at a location where the wind turbine generator (12) is installed becomes higher than or equal to a predetermined threshold value at which servicing of the component is not possible, the timing being selected with reference to the determined timing.

FIG. 1

EP 2 685 097 A1

**Description**

{Technical Field}

The present invention relates to servicing-timing selecting apparatuses and servicing-timing selecting methods.

{Background Art}

When main components used in a wind turbine generator, such as a bearing, a gear box, and a generator, fail, the operation of the wind turbine generator would need to be suspended until servicing (maintenance) for replacing or repairing the failed components is completed, resulting in reduced income from electricity sales.
In addition, if the arrangements for the replacement or repair work of a component are performed after the component has failed, the suspension period of the wind turbine generator from the time of failure to the time of recovery is further extended, which is a problem in that the income from electricity sales is further reduced.
To solve this problem, Patent Literature 1 discusses a technology in which a monitoring device for a wind turbine generator system determines whether or not the actual operational status thereof has reached a certain operation level at which maintenance is necessary on the basis of an operating log of the wind turbine generator system obtained by operational-status monitoring means and preset maintenance conditions for the wind turbine generator system, so as to predict when the components may fail. By performing maintenance on the wind turbine generator in accordance with the prediction result, the suspension period of the wind turbine generator can be shortened.

{Citation List}

{Patent Literature}

{PTL 1}
Japanese Unexamined Patent Application, Publication No. 2006-342766

{Summary of Invention}

{Technical Problem}

The main components in the wind turbine generator are mainly provided within a nacelle set on the top of a tower standing upright on a foundation, as well as within a hub provided on the nacelle. In other words, the main components are provided at a high position. Therefore, servicing for replacing or repairing the components of the wind turbine generator requires work at a high position using a crane device.
However, since the wind turbine generator is a device that converts wind energy into electric power, it is installed where wind tends to blow. In addition, as mentioned above, the main components in the wind turbine generator are provided at a high position, that is, at a position exposed to wind.
Therefore, for example, it is sometimes not possible to use the crane device due to the effects of the wind, and there are times when servicing cannot be performed, depending on the season. This may sometimes lead to a long servicing period, resulting in an extended suspension period of the wind turbine generator.
When the servicing period of the wind turbine generator is extended, for example, the cost of using the crane device (i.e., a rental fee of the crane device) increases, sometimes resulting in increased servicing costs.
The present invention has been made in view of these circumstances, and an object thereof is to provide a servicing-timing selecting apparatus and a servicing-timing selecting method that can select an appropriate timing for servicing a wind turbine generator.

{Solution to Problem}

In order to solve the aforementioned problems, a servicing-timing selecting apparatus and a servicing-timing selecting method according to the present invention employ the following solutions.
Specifically, a servicing-timing selecting apparatus according to a first aspect of the present invention includes determining means for determining a servicing timing for replacing or repairing a component included in a wind turbine generator due to a failure of the component in accordance with a time point at which the component may fail, which is predicted on the basis of a temporal change in a detection signal output from detecting means for detecting the status of the component; storing means for storing servicing suspension information indicating, for every predetermined number of days and every predetermined number of hours, a rate at which a wind speed at a location where the wind turbine generator is installed becomes higher than or equal to a predetermined threshold value at which servicing of the component is not possible; and selecting means for selecting a servicing timing for the component on the basis of the rate, indicated by the servicing suspension information stored in the storing means, with reference to the timing determined by the determining means.

With the servicing-timing selecting apparatus according to the first aspect, the determining means determines the servicing timing for replacing or repairing the component included in the wind turbine generator due to a failure of the component in accordance with the time point at which the component may fail, which is predicted on the basis of a temporal change in the detection signal output from detecting means for detecting the status of the component.

The storing means stores the servicing suspension information indicating, for every predetermined number of days and every predetermined number of hours, the rate at which the wind speed at the location where the wind turbine generator is installed becomes higher than or equal to the predetermined threshold value at which servicing of the component is not possible. The expression "every predetermined number of days" includes, for example, every week or every month, and the expression "every predetermined number of hours" includes, for example, every hour or every two hours a day.

The wind turbine generator is installed where wind tends to blow, and the main component in the wind turbine generator is provided at a high position, that is, at a position exposed to wind. Therefore, there are often cases where it is not possible to perform servicing, depending on the wind speed.

In light of this, the selecting means selects the servicing timing for the component on the basis of the rate, indicated by the servicing suspension information, with reference to the timing determined by the determining means.

Consequently, the servicing-timing selecting apparatus according to the first aspect can select a timing in which the effect of wind is small as the servicing timing, thereby selecting an appropriate timing for servicing the wind turbine generator.

In the servicing-timing selecting apparatus according to the first aspect, a servicing plan in which a servicing period calculated on the basis of the rate indicated by the servicing suspension information is smaller than or equal to a predetermined value may be selected by the selecting means from among a plurality of servicing plans made with reference to the timing determined by the determining means.

With this configuration, since the servicing plan in which the servicing period calculated on the basis of the rate indicated by the servicing suspension information is smaller than or equal to the predetermined value is selected from among the plurality of servicing plans made with reference to the timing determined by the determining means, a timing that allows for more efficient servicing can be selected. The servicing period that is smaller than or equal to the predetermined value is most preferably a minimal servicing period among the multiple servicing plans.

The servicing-timing selecting apparatus according to the first aspect may further include calculating means for calculating a cost required for each of the servicing plans made with reference to the timing determined by the determining means, and a servicing plan in which the cost calculated by the calculating means is smaller than or equal to a predetermined value may be selected by the selecting means from among the plurality of servicing plans.

With this configuration, since the cost required for each of the servicing plans is calculated, and the servicing plan in which the cost is smaller than or equal to the predetermined value is selected, a timing that allows for economically efficient servicing can be selected. The cost that is smaller than or equal to the predetermined value is most preferably a minimal cost among the multiple servicing plans.

In the servicing-timing selecting apparatus according to the first aspect, the cost calculated by the calculating means may include a damage cost that occurs when the wind turbine generator stops.

With this configuration, since the servicing cost  includes the damage cost that occurs when the wind turbine generator stops, a timing that allows for economically efficient servicing can be selected.

A servicing-timing selecting method according to a second aspect of the present invention includes a first step of determining a servicing timing for replacing or repairing a component included in a wind turbine generator due to a failure of the component in accordance with a time point at which the component may fail, which is predicted on the basis of a temporal change in a detection signal output from detecting means for detecting the status of the component; and a second step of selecting a servicing timing for the component on the basis of a rate at which a wind speed at a location where the wind turbine generator is installed becomes higher than or equal to a predetermined threshold value at which servicing of the component is not possible, the rate being indicated by servicing suspension information for every predetermined number of days and every predetermined number of hours, the timing being selected with reference to the timing determined in the first step.

With the servicing-timing selecting method according to the second aspect, a timing in which the effect of wind is small can be selected as the servicing timing, thereby selecting an appropriate timing for servicing the wind turbine generator.

{Advantageous Effects of Invention}

The present invention is advantageous in that it can select an appropriate timing for servicing a wind turbine generator.

{Brief Description of Drawings}

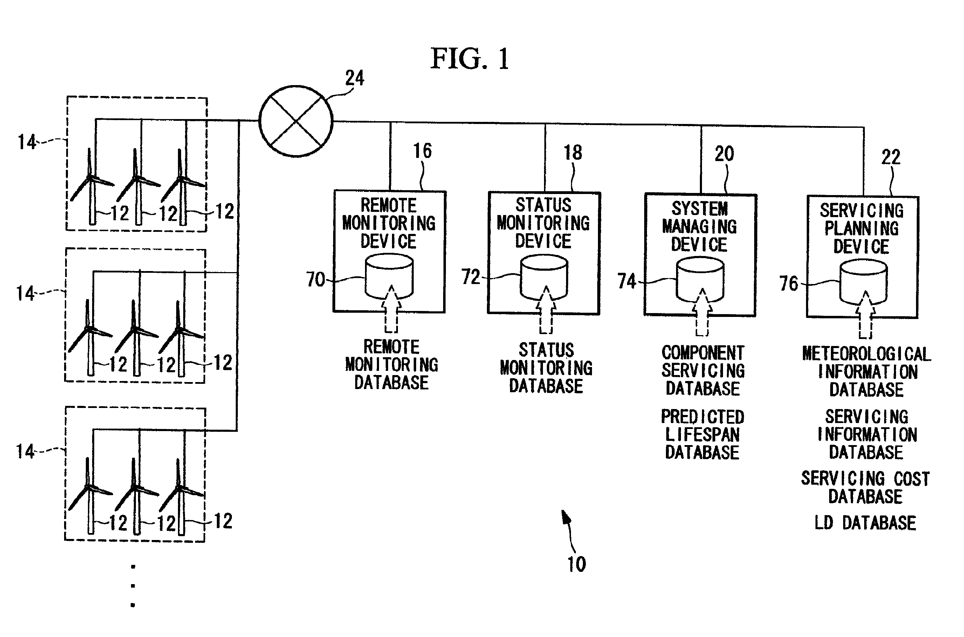

{Fig. 1} Fig. 1 illustrates the overall configuration of a wind turbine generator system according to a first embodiment of the present invention.

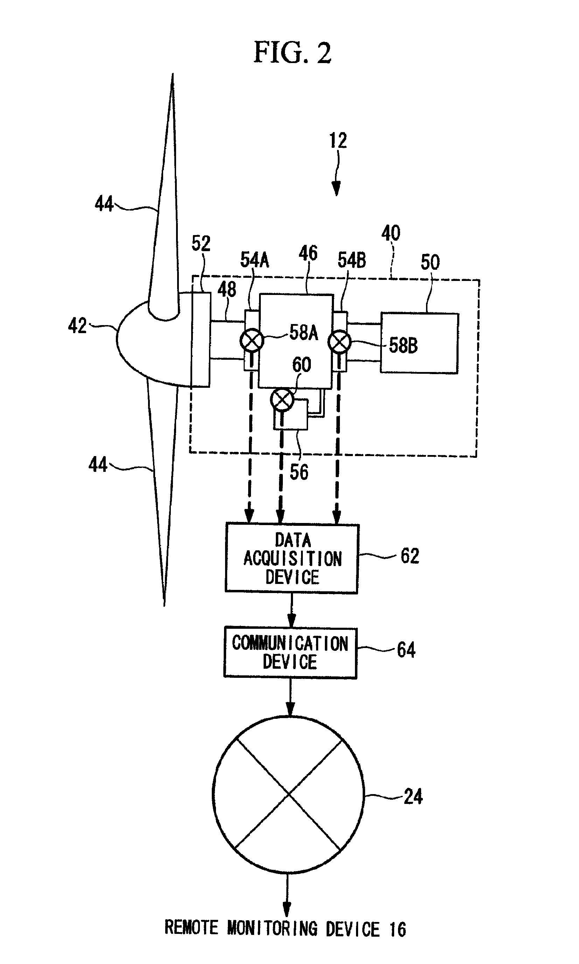

{Fig. 2} Fig. 2 schematically illustrates status detectors that detect the status of main components included in each wind turbine generator according to the first embodiment of the present invention.

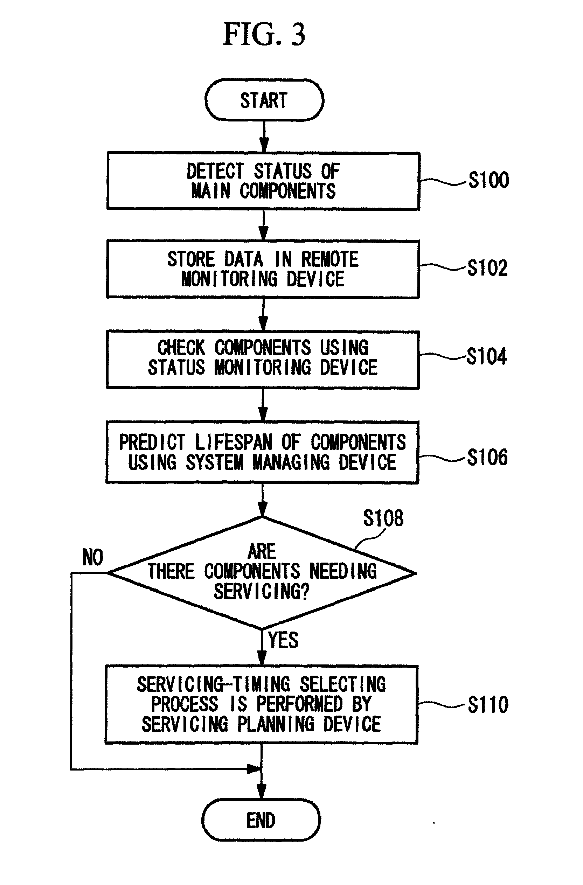

{Fig. 3} Fig. 3 is a flowchart illustrating the flow of a servicing planning process according to the first embodiment of the present invention.

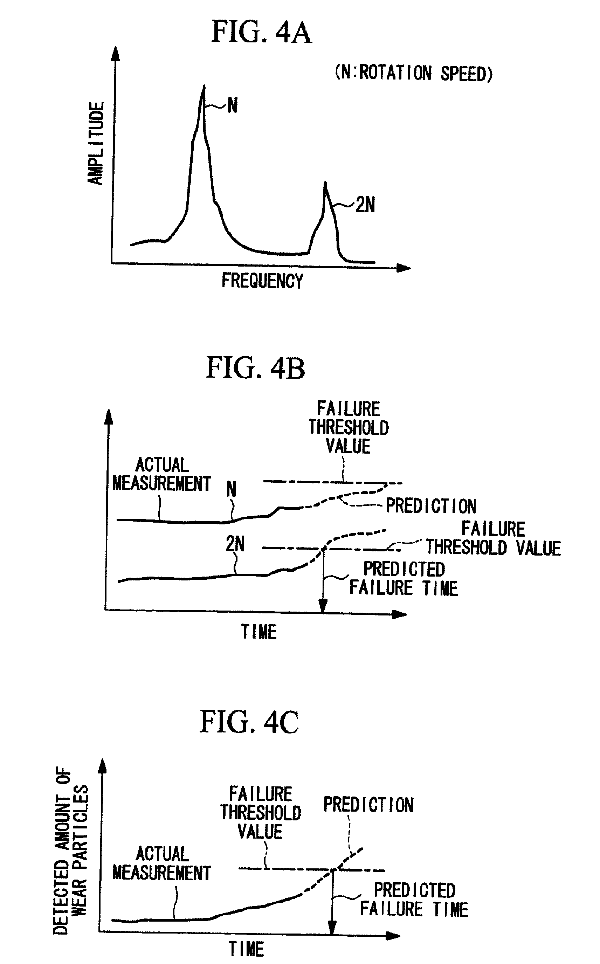

{Fig. 4A} Fig. 4A is a diagram for explaining how the status of each main component is checked by a status monitoring device according to the first embodiment of the present invention, showing a detection result of a vibration sensor.

{Fig. 4B} Fig. 4B is another diagram for explaining how the status of each main component is checked by the status monitoring device according to the first embodiment of the present invention, showing a predicted failure time obtained from the detection result of the vibration sensor.

{Fig. 4C} Fig. 4C is another diagram for explaining how the status of each main component is checked by the status monitoring device according to the first embodiment of the present invention, showing a predicted failure time obtained from a detection result of a metal scanner.

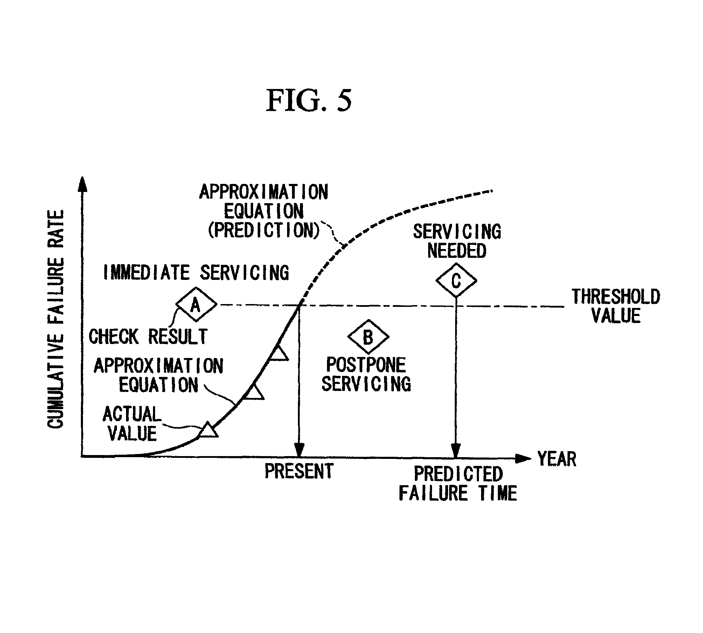

{Fig. 5} Fig. 5 illustrates how a lifespan prediction device according to the first embodiment of the present invention determines whether or not a main component needs servicing.

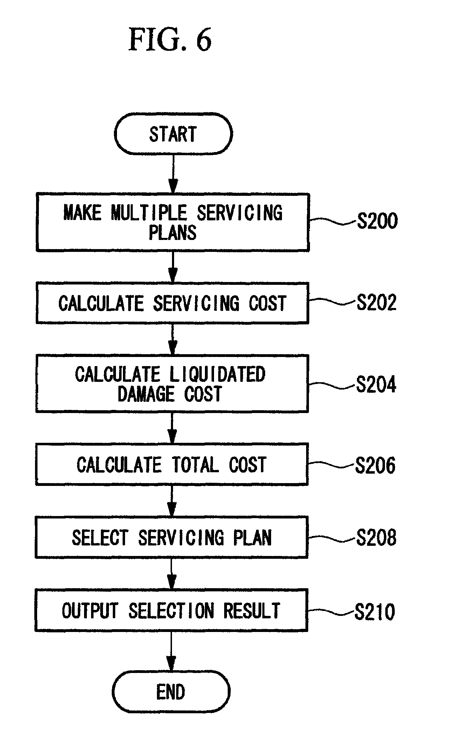

{Fig. 6} Fig. 6 is a flowchart illustrating the details of a servicing-timing selecting program executed by a servicing planning device according to the first embodiment of the present invention.

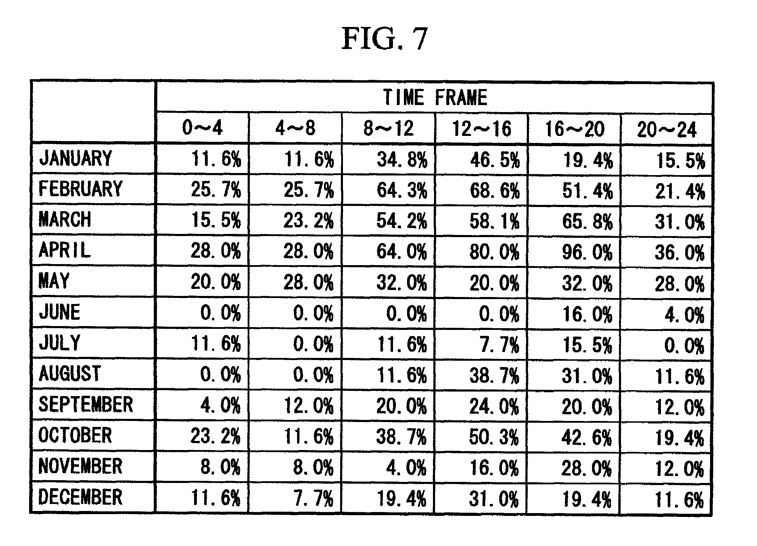

{Fig. 7} Fig. 7 schematically illustrates the contents of a meteorological prediction database according to the first embodiment of the present invention.

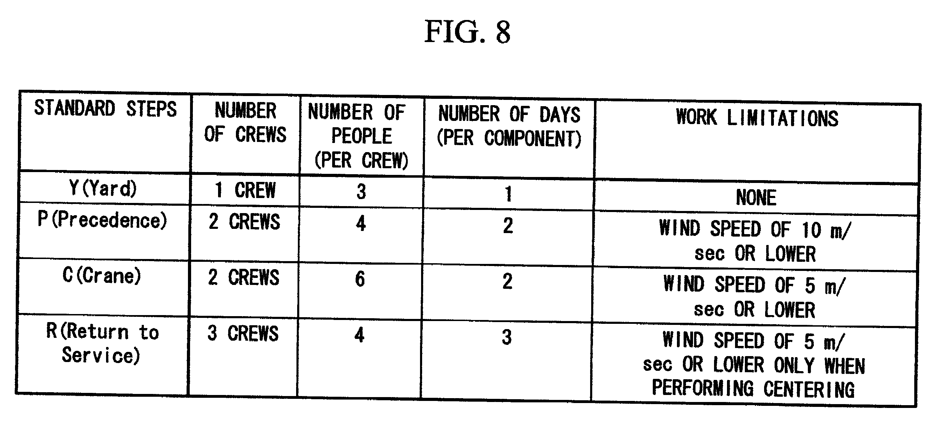

{Fig. 8} Fig. 8 schematically illustrates the contents of a servicing information database according to the first embodiment of the present invention.

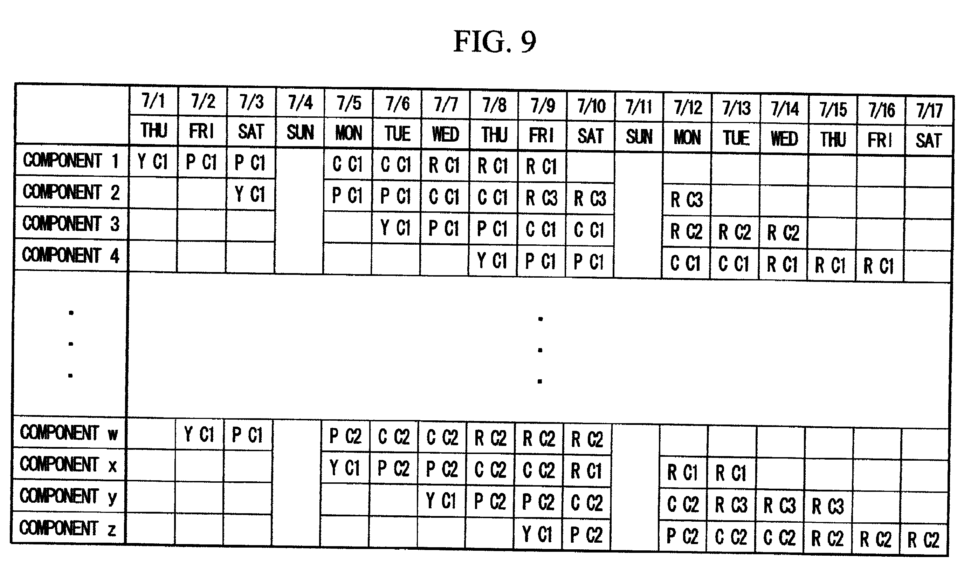

{Fig. 9} Fig. 9 schematically illustrates servicing plans made by the servicing planning device according to the first embodiment of the present invention.

{Description of Embodiments}

Embodiments of a servicing-timing selecting apparatus and a servicing-timing selecting method according to the present invention will be described below with reference to the drawings.

First Embodiment

A first embodiment of the present invention will be described below with reference to Fig. 1.

A wind turbine generator system 10 according to the first embodiment includes a plurality of sites 14A, 14B, and 14C each having a plurality of wind turbine generators 12, and a remote monitoring device 16, a status monitoring device 18, a system managing device 20, and a servicing planning device 22 that serve as information processors. In the following description, when the sites 14 are to be distinguished from each other, one of A and B will be added as a suffix to the reference numeral, whereas if the sites 14 are not to be distinguished from each other, the suffixes A and B will be omitted.

Each wind turbine generator 12 converts wind energy into electric power and transmits data (referred to as "component status data" hereinafter) indicating the status of main components included in the wind turbine generator 12 to the remote monitoring device 16 via a communication line 24 (e.g., the Internet or a dedicated line).

Fig. 2 schematically illustrates status detectors that detect the status of the main components included in the wind turbine generator 12.

The wind turbine generator 12 shown in Fig. 2 has a nacelle 40 set on the top of a tower standing upright on a foundation, and a hub 42 provided on the nacelle 40 in a  rotatable manner about an axis extending substantially in the horizontal direction.

Multiple (three in the first embodiment) blades 44 are attached to the hub 42 so as to extend radially around the rotation axis of the hub 42. Thus, the force of wind striking the blades 44 in the rotation-axis direction of the hub 42 is converted to a driving force that rotates the hub 42 about the rotation axis. The driving force is transmitted to a generator 50 via a main shaft 48 that rotates in accordance with the rotation of the hub 42 and also via a gear box 46 that increases the rotation speed of the main shaft 48, and is converted to electric power by the generator 50.

The main shaft 48 is provided with a main bearing 52 that supports the main shaft 48. A bearing 54A is provided at the low-speed side of the gear box 46, and a bearing 54B is provided at the high-speed side of the gear box 46.

Furthermore, the nacelle 40 is provided with an oil lubrication device 56 that supplies lubricating oil to the respective bearings so as to lubricate them.

Although the bearings 54A and 54B and the oil lubrication device 56 are described as examples of the main components in the first embodiment, the main components may be other components.

As the status detectors that detect the status of the main components in the first embodiment, for example, vibration sensors 58A are provided for the bearing 54A of the gear box 46, vibration sensors 58B are provided for the bearing 54B of the gear box 46 (for example, three of each with a measurement frequency of 1 kHz), and a metal scanner (wear particle detector) 60 is provided for the oil lubrication device 56.

The vibration sensors 58A and 58B detect vibration occurring in the bearings 54A and 54B, and the metal scanner 60 detects the amount of wear particles in the oil lubrication device 56.

The vibration sensors 58A and 58B and the metal scanner 60 are controlled by a data acquisition device 62.

Specifically, the data acquisition device 62 activates the vibration sensors 58A and 58B and the metal scanner 60 for a predetermined time period (e.g., for about five minutes once a day) and receives detection signals from the vibration sensors 58A and 58B and the metal scanner 60. Upon receiving the detection signals, the data acquisition device 62 performs analysis on the basis of the detection signals and transmits the analysis result as component status data to the remote monitoring device 16 via a communication device 64 and the communication line (such as the Internet). For example, the data acquisition device 62 and the communication device 64 are provided within the nacelle 40 or the tower.

The remote monitoring device 16 includes, for example, a storage unit 70, such as a hard disk drive (HDD), and makes the storage unit 70 store a remote monitoring database showing the component status data transmitted from the data acquisition device 62 in a time-series fashion and also in the form of a table for each wind turbine generator 12 and each main component.

Based on the contents of the remote monitoring database stored in the storage unit 70 of the remote monitoring device 16, the status monitoring device 18 checks the status of the main components included in the wind turbine generator 12 and makes a storage unit 72 store a status monitoring database showing the check result of each main component. To check the status of the main components means to predict when the main components may fail on the basis of a temporal change in the detection signals output from the status detectors (e.g., the vibration sensors 58A and 58B and the metal scanner 60) that detect the status of the main components included in the wind turbine generator 12.

In the system managing device 20, a component servicing database and a predicted lifespan database are stored in a storage unit 74.

The component servicing database shows, for each site and each main component, the time when the main component was replaced or repaired due to a failure of the main component.

The predicted lifespan database shows a prediction equation, which is calculated on the basis of the contents of the component servicing database, used for predicting a rate at which each main component may fail.

The system managing device 20 determines a servicing timing for replacing or repairing each main component due to a failure thereof on the basis of the check result of the main component transmitted from the status monitoring device 18 and the prediction equation shown in the predicted lifespan database.

In the servicing planning device 22, a meteorological information database, a servicing information database, a servicing cost database, and an LD database are stored in a storage unit 76.

The meteorological information database shows, for every predetermined number of days and every predetermined number of hours, a rate at which the wind speed at a location where each wind turbine generator 12 is installed becomes higher than or equal to a predetermined threshold value at which servicing of the main components is not possible.

For each main component, the servicing information database shows the required steps, the required number of days, the required number of people, and work limitations when servicing the main component.

The servicing cost database shows data required for calculating the servicing cost for each main component.

The LD database shows a liquidated damage (LD) rate that occurs when the supply of electric power is cut off. The LD rate is based on an agreement made with an electric power supplier, which supplies the electric power generated by the wind turbine generators 12.

Based on the determination result transmitted from the system managing device 20, the meteorological information database, the servicing information database, the servicing cost database, and the LD database, the servicing planning device 22 selects a servicing timing for a main component that needs servicing, and also makes servicing plans.

Next, the flow of a servicing planning process performed by the wind turbine generator system 10 according to the first embodiment will be described with reference to Fig. 3.

In step 100, when a time point for acquiring data from the status detectors (e.g., the vibration sensors 58A and 58B and the metal scanner 60) is reached, the data acquisition device 62 receives the detection signals from the status detectors and transmits the component status data obtained as the result of the detection to the remote monitoring device 16 via the communication line 24.

In step 102, the remote monitoring device 16 adds the received component status data to the remote monitoring database for each wind turbine generator 12 and each main component so as to make the HDD 70 store the data.

In step 104, the status monitoring device 18 checks the status of the main components in each wind turbine generator 12 on the basis of the contents of the remote monitoring database.

The following description relates to how the status of each main component is checked by the status monitoring device 18.

For example, the status monitoring device 18 determines the amplitude at the natural frequency according to each rotation speed (i.e., rotation speed N at the low-speed side and rotation speed 2N at the high-speed side) from the component status data based on the detection signals output from the vibration sensors 58A and 58B that detect vibration of the bearings 54A and 54B of the gear box 46 (see Fig. 4A).

Then, based on a temporal change in actually-measured amplitude values for each rotation speed, the status monitoring device 18 calculates a predicted amplitude value corresponding to a further elapsed time.

Furthermore, the status monitoring device 18 calculates a predicted failure time of the gear box 46, which is a time point at which the calculated predicted amplitude value exceeds a predetermined failure threshold value (see Fig. 4B). The predicted value is calculated from, for example, an approximation equation obtained from the actually measured values. The failure threshold value includes a plurality of values set in a stepwise manner.

Furthermore, for example, based on a temporal change in the detected amount of wear particles, which is included in the component status data based on the detection signal output from the metal scanner 60 that detects the amount of wear particles within the oil lubrication device 56, the status monitoring device 18 calculates a predicted value for the detected amount of wear particles corresponding to a further elapsed time.

Moreover, the status monitoring device 18 calculates a predicted failure time of the oil lubrication device 56, which is a time point at which the calculated predicted value for the detected amount of wear particles exceeds a predetermined failure threshold value (see Fig. 4C).

Then, the status monitoring device 18 adds the temporal changes in the actually measured values and the prediction results shown in Figs. 4B and 4C to the status monitoring database, and transmits the calculated predicted failure time of each main component to the system managing device 20.

In step 106, the system managing device 20 determines a servicing timing for replacing or repairing each main component due to a failure thereof on the basis of the check result of the main component transmitted from the status monitoring device 18 and the prediction equation shown in the predicted lifespan database.

The following description relates to how the servicing timing for each main component is determined in the system managing device 20.

Every time the system managing device 20 receives information indicating a time point at which a main component in each wind turbine generator 12 is serviced (replaced or repaired), the aforementioned time point is added to the component servicing database, and the added time point is managed for each site 14 and each main component. The information indicating the time point at which the main component in the wind turbine generator 12 is serviced (replaced or repaired) is input by, for example, an operator via a keyboard.

The system managing device 20 calculates a temporal change in a cumulative failure rate (i.e., a rate at which a failure occurs) for each main component on the basis of the contents of the component servicing database stored in the storage unit 74.

An actual value of the cumulative failure rate is calculated from the following equation (1). The actual value of the cumulative failure rate is calculated for each type of main component in each site 14.

$$\text{Actual Value of Cumulative Failure Rate} = \text{(Total Number of Cumulative Failures Per Year)} / \text{(Total Number of Main Components of Each Type)} \quad (1)$$

For example, assuming that there are a total of 120 gear boxes 46 at the site 14A and that the number of cumulative failures from the year 2008 (start of operation) to the year 2010 is 10, the cumulative failure rate up to the year 2010 is 8.3%.

The system managing device 20 predicts a cumulative failure rate corresponding to a further elapsed time on the basis of the actual value of the cumulative failure rate in each year.

The cumulative failure rate is predicted by, for example, using an approximation equation of the actual values of the cumulative failure rate. As the approximation equation, for example, the following Weibull approximation equation (2) is used.

$$P(t) = 1 - e^{1-\left(\frac{t}{a}\right)^b} \quad \cdots (2)$$

In equation (2), t denotes the year, and a and b denote parameters. By changing these parameters, an approximation equation for the cumulative failure rate is obtained, and the cumulative failure rate is predicted on the basis of the approximation equation. The cumulative failure rate predicted for each type of main component is added to the predicted lifespan database.

Fig. 5 illustrates how the system managing device 20 determines whether or not a main component needs servicing on the basis of the approximation equation for the cumulative failure rate.

The system managing device 20 indexes the soundness of each main component on the basis of the check result thereof transmitted from the status monitoring device 18, applies the indexed soundness to a predicted failure time (for example, the number of years in Fig. 5 is set to 0 to 15 years, and the soundness is set to 0% to 100%; for example, assuming that the current year is the seventh year, "A" corresponds to when the soundness is 30%, and "C" corresponds to when the soundness is 80%), and compares it with the approximation equation for the cumulative failure rate.

As shown in Fig. 5, if the check result indicates that a failure has occurred in the past relative to the current year and the value is greater than the cumulative failure rate indicated by the approximation equation (i.e., in the case of check result A), since there is a possibility that the main component has failed already, it is determined that immediate servicing is necessary.

If the check result indicates that a failure may occur in the future and the value is smaller than or equal to the threshold value (i.e., in the case of check result B), since there is conceivably a low possibility that the main component may fail, it is determined that servicing of the main component should be postponed.

On the other hand, if the check result indicates that a failure may occur in the future and the value exceeds the threshold value (i.e., in the case of check result C), there is conceivably a high possibility that the main component may fail. Therefore, the predicted failure time obtained from the check result of the main component is determined as being a servicing timing for the main component. The servicing timing, which is the determination result, serves as a reference timing (referred to as "reference servicing timing" hereinafter) to be used when making servicing plans, which will be described later.

The aforementioned threshold value is set in advance for each main component and is managed in the predicted lifespan database.

In step 108, the system managing device 20 determines whether or not there is a main component that needs servicing (referred to as "component needing servicing" hereinafter). If the determination result indicates "YES", the process proceeds to step 110. If the determination result indicates "NO", the process ends.

The component needing servicing in this case is a main component corresponding to check result C in Fig. 5, and a notification of a main component that needs immediate servicing corresponding to check result A is provided separately.

On the other hand, a main component corresponding to check result B is not to be serviced. Therefore, a servicing timing for this main component is determined again by the system managing device 20 when the predicted value calculated by the status monitoring device 18 reaches the next threshold value of the multiple threshold values.

When the process proceeds to step 110, that is, when there is a component needing servicing, the system managing device 20 transmits data related to the component needing servicing to the servicing planning device 22 together with the reference servicing timing.

In step 110, the servicing planning device 22 performs a servicing-timing selecting process for selecting a servicing timing for the component needing servicing.

Fig. 6 is a flowchart illustrating the flow of a servicing-timing selecting program executed by the servicing planning device 22 when performing the servicing-timing selecting process. The servicing-timing selecting program is stored in advance in, for example, a predetermined region of the storage unit 76.

First, in step 200, servicing plans are made.

The servicing plans are made on the basis of the contents of the meteorological information database stored in the storage unit 76.

Fig. 7 schematically illustrates an example of the contents of the meteorological information database.

As described above, the meteorological information database shows, for every predetermined number of days and every predetermined number of hours, a rate (referred to as "servicing suspension rate" hereinafter) at which the wind speed at a location where each wind turbine generator 12 is installed becomes higher than or equal to a predetermined threshold value at which servicing of components needing servicing is not possible.

Although the wind speed at a location where each wind turbine generator 12 is installed is an average wind speed in the first embodiment, the wind speed may alternatively be set as a maximum wind speed or as other wind speeds, such as a wind speed lower than or higher than the average wind speed by a predetermined rate (for example, 20%) .

Furthermore, although the predetermined number of days is set to one month and the predetermined number of hours is set to four hours in the first embodiment, as shown in Fig. 7, the predetermined number of days may alternatively be set to, for example, five days, ten days, one week, or two weeks, and the predetermined number of hours may alternatively be set to, for example, 0.5 hours, one hour, or two hours.

The servicing suspension rate is generated, for example, by calculating an average wind speed for each month and each time frame from wind speed data in the vicinity of each site 14 and calculating a rate at which the average wind speed exceeds a wind speed corresponding to a predetermined threshold value. Because the average wind speed is updated every time the servicing planning device 22 receives new wind speed data, the servicing suspension rate is updated correspondingly.

Then,    servicing    period    is    calculated    from    the    following    equation    (3):

$$TC(PN) = TC0(PN) \times \frac{1}{1 - WP(m,t)} \qquad \cdots (3)$$

where PN denotes a component needing servicing, m denotes a servicing month, t denotes a time frame, P(m,t) denotes a servicing suspension rate, and TC0 (PN) denotes a standard servicing period.

The servicing suspension rate P(m,t) is read from the meteorological information database, and the standard servicing period TC0 (PN) is read from the storage unit 76 since it is stored in advance in the storage unit 76 for each main component.

The example in Fig. 7 shows that, between 8:00 and 16:00, which is a servicing time frame, the servicing suspension rate is high from February to April, and that the servicing suspension rate is low from June to September. Based on equation (3), in the example in Fig. 7, the servicing suspension period is long from February to April and is short from June to September.

Furthermore, specific servicing plans are made on the basis of the servicing information database that indicates the required steps, the required number of days, the required number of people, and work limitations for each main component  when servicing the component needing servicing.

Fig. 8 schematically illustrates an example of the contents of the servicing information database and shows standard steps required when performing servicing.

Standard step Y involves storage work and has no work limitations. Standard step P involves ground work and has the work limitation that servicing cannot be performed unless the wind speed is lower than or equal to 10 m/sec. Standard step C involves work using a crane and has the work limitation that servicing cannot be performed unless the wind speed is lower than or equal to 5 m/sec. Standard step R involves dismantling work and operation recovery work and has the work limitation that servicing cannot be performed unless the wind speed is lower than or equal to 5 m/sec only when a centering process is to be performed on the nacelle 40. In the first embodiment, although the standard steps have different work limitations, particularly, different wind-speed limitation values, alternatively, the wind-speed limitation values may be the same.

A combination of standard steps to be performed for servicing each main component is set in advance. Fig. 9 schematically illustrates an example of servicing plans made by the servicing planning device 22.

As shown in Fig. 9, in each servicing plan, a process is set for each day of the week for each main component. A number added as a suffix to each alphabetical character denoting a standard step indicates the number of crews required (i.e., an integral multiple of the number of crews shown in Fig. 8).

Furthermore, multiple servicing plans for each component needing servicing are made with reference to the reference servicing timing input from the system managing device 20. For example, although servicing plans are made for each month  within one year prior to the reference servicing timing in the first embodiment, the servicing plans may be made for each month within six months prior to the reference servicing timing, or the servicing plans may be made for each month within six months prior to and six months following the reference servicing timing.

The servicing plans may be made by using another servicing planning program, or may be made by the operator.

In step 202, a servicing cost required for the work involved in each of the multiple servicing plans is calculated.

An example of how the servicing cost is calculated will be described below.

In the first embodiment, a servicing cost C(PN) is calculated from the sum of a cost CC(Tc) required for using the crane (referred to as "crane cost" hereinafter) and a cost CP(Tp) required for labor (referred to as "labor cost" hereinafter), as shown in the following equation (4). In this case, Tp denotes the time of use of the crane, and Tp denotes the labor time.

$$C(PN) = CC(Tc) + CP(Tp) \qquad \cdots (4)$$

Specifically, in the first embodiment, the crane cost is calculated in accordance with the time of use of the crane, and the labor cost is calculated in accordance with the labor time.

The time Tc of use of the crane is calculated from the following equation (5):

$$Tc = TC(PN) + TMc(x, y) + TMSc(S) \qquad \cdots (5)$$

where TC(PN) denotes the servicing period described above, TMc(x, y) denotes the amount of time required for moving the crane from point x to point y within each site 14, and TMSc(S) denotes the amount of time required for moving the crane from another location.

The lavor time Tp is calculated from the following equation (6).

$$Tp = TC(PN) + TMSp(S) \qquad \cdots (6)$$

where TMSp(S) denotes the amount of time required for moving service engineers from another location.

Functions to be used for calculating the crane cost CC(Tc), the labor cost CP(Tp), the moving time TMc (x, y), the moving time TMSc(S), and the moving time TMSp(S) are managed in the servicing cost database.

In step 204, a liquidated damage (LD) cost is calculated for each of the multiple servicing plans. The liquidated damage cost is calculated from the following equation (7):

$$LD(T) = (\text{Expected Amount of Power Generated in Suspension Period}) \times (\text{LD Rate}) \times (\text{Guaranteed Rate of Operation}) \qquad (7)$$

In equation (7), T denotes a suspension period of the wind turbine generator 12, which is equal to or longer than the servicing period. The guaranteed rate of operation is, for example, 90% to 99%. The LD rate is read from the LD database.

In step 206, a total cost Ctotal is calculated for each of the multiple servicing plans from the sum of the servicing cost C(PN) and the liquidated damage cost LD(T), as shown in the following equation (8).

$$Ctotal = C(PN) + LD(T) \qquad \cdots (8)$$

In step 208, a servicing period is selected by selecting a service plan to be actually executed from among the multiple servicing plans, and the program ends. Specifically, a servicing plan in which the total cost calculated in step 206 is lower than or equal to a predetermined value is selected from among the multiple servicing plans.

In the servicing-timing selecting process according to the first embodiment, a servicing plan with a minimal total cost is selected from among the multiple servicing plans. Alternatively, for example, of servicing plans in which the total cost is lower than or equal to a predetermined cost, a servicing plan that is commenced at the earliest timing or a servicing plan that is closest to the reference servicing timing may be selected.

In step 210, the servicing plan selected in step 208 is output, and the program ends. Specific examples of how the selected servicing plan is output include displaying the selected servicing plan on an image display provided in the servicing planning device 22, outputting a sheet having the servicing plan recorded thereon by a printer, and storing data indicating the selected servicing plan in the storage unit 76.

As described above, in the wind turbine generator system 10 according to the first embodiment, the system managing device 20 determines a servicing timing for replacing or repairing a main component due to a failure thereof in accordance with a time point at which the main component may fail, which is predicted on the basis of a temporal change in the detection signals output from the status detectors that detect the status of the main components included in each wind turbine generator 12. Then, with reference to the determined timing, the servicing planning device 22 selects a servicing timing for the component needing servicing on the basis of the servicing suspension rate at which the average wind speed at the location where the wind turbine generator 12 is installed becomes higher than or equal to a predetermined threshold value at which servicing of the component needing servicing is not possible.

Thus, the wind turbine generator system 10 according to the first embodiment can select a timing at which the effect of wind is small as the servicing timing, thereby selecting an appropriate timing for servicing the wind turbine generator  12.

Furthermore, the wind turbine generator system 10 according to the first embodiment calculates the total cost required for each servicing plan and selects a servicing plan with a total cost that is lower than or equal to a predetermined value, thereby selecting a timing that allows for economically efficient servicing.

Furthermore, in the wind turbine generator system 10 according to the first embodiment, the total servicing cost includes a liquidated damage cost that occurs when the wind turbine generator 12 stops, thereby selecting a timing that allows for economically efficient servicing.


Second Embodiment


A second embodiment of the present invention will be described below.

Since the configuration of a wind turbine generator system 10 according to the second embodiment is similar to the configuration of the wind turbine generator system 10 according to the first embodiment shown in Fig. 1, a description thereof will be omitted.

In the first embodiment, when servicing a component needing servicing, the moving the crane and the moving the service engineers between the sites 14 are not taken into account. In the second embodiment, the servicing plans are made by taking into account the moving the crane and service engineers between the sites 14, as well as assignment of service engineers.

For example, in the second embodiment, the servicing planning device 22 makes and selects servicing plans such that the costs required for moving the crane and the service engineers between neighboring sites 14 are reduced. As  another example, the servicing planning device 22 makes and selects servicing plans such that servicing is not simultaneously performed on the same type of components needing servicing at different sites 14.

Although the present invention has been described above with reference to the above embodiments, the technical scope of the invention is not to be limited to the scope of the above embodiments. Various modifications or alterations can be made in the above embodiments so long as they do not depart from the spirit of the invention, and configurations with these modifications or alterations are included in the technical scope of the invention.

For example, although a servicing plan with a total cost that is lower than or equal to a predetermined value is selected in the servicing plan selecting process described in each of the above embodiments, the present invention is not limited to this and may permit a configuration that selects a servicing plan with a servicing cost that is lower than or equal to a predetermined value without calculating the liquidated damage cost.

Furthermore, in the servicing plan selecting process, a servicing plan in which the servicing period calculated on the basis of the servicing suspension rate indicated by the meteorological information database is smaller than or equal to a predetermined value may be selected from among the multiple servicing plans made with reference to the reference servicing timing, without calculating the servicing cost and the liquidated damage cost. Consequently, a timing that allows for more efficient servicing can be selected.

In the case of the above configuration, a servicing plan with a minimal servicing period may be selected as the servicing period smaller than or equal to the predetermined value from among the multiple servicing plans. As a further alternative, for example, a servicing plan that is commenced at the earliest timing or a servicing plan that is closest to the reference servicing timing may be selected from among servicing plans in which the servicing period is shorter than or equal to a predetermined servicing period.

Furthermore, although the remote monitoring device 16, the status monitoring device 18, the system managing device 20, and the servicing planning device 22 are described as being different information processors in each of the above embodiments, the present invention is not limited to this configuration. Alternatively, the present invention permits a configuration in which the functions of the remote monitoring device 16, the status monitoring device 18, the system managing device 20, and the servicing planning device 22 are provided in a single information processor, or a configuration in which any two or more of the functions of the remote monitoring device 16, the status monitoring device 18, the system managing device 20, and the servicing planning device 22 are provided in a single information processor.

{Reference Signs List}

10 wind turbine generator system
12 wind turbine generator
16 remote monitoring device
18 status monitoring device
20 system managing device
22 servicing planning device
46 gear box
54A, 54B bearing
56 oil lubrication device
58A, 58B vibration sensor
60 metal scanner

**Claims**

1. A servicing-timing selecting apparatus comprising:

   determining means for determining a servicing timing for replacing or repairing a component included in a wind turbine generator due to a failure of the component in accordance with a time point at which the component may fail, which is predicted on the basis of a temporal change in a detection signal output from detecting means for detecting the status of the component;
   storing means for storing servicing suspension information indicating, for every predetermined number of days and every predetermined number of hours, a rate at which a wind speed at a location where the wind turbine generator is installed becomes higher than or equal to a predetermined threshold value at which servicing of the component is not possible; and
   selecting means for selecting a servicing timing for the component on the basis of the rate, indicated by the servicing suspension information stored in the storing means, with reference to the timing determined by the determining means.

2. The servicing-timing selecting apparatus according to Claim 1, wherein a servicing plan in which a servicing period calculated on the basis of the rate indicated by the servicing suspension information is smaller than or equal to a predetermined value is selected by the selecting means from among a plurality of servicing plans made with reference to the timing determined by the determining means.

3. The servicing-timing selecting apparatus according to Claim 1 or 2, further comprising calculating means for calculating a cost required for each of the servicing plans made with reference to the timing determined by the determining means, and
   wherein a servicing plan in which the cost calculated by the calculating means is smaller than or equal to a predetermined value is selected by the selecting means from among the plurality of servicing plans.

4. The servicing-timing selecting apparatus according to Claim 3, wherein the cost calculated by the calculating means includes a damage cost that occurs when the wind turbine generator stops.

5. A servicing-timing selecting method comprising:

   a first step of determining a servicing timing for replacing or repairing a component included in a wind turbine generator due to a failure of the component in accordance with a time point at which the component may fail, which is predicted on the basis of a temporal change in a detection signal output from detecting means for detecting the status of the component; and
   a second step of selecting a servicing timing for the component on the basis of a rate at which a wind speed at a location where the wind turbine generator is installed becomes higher than or equal to a predetermined threshold value at which servicing of the component is not possible, the rate being indicated by servicing suspension information for every predetermined number of days and every predetermined number of hours, the timing being selected with reference to the timing determined in the first step.

# FIG. 1

EP 2 685 097 A1

REMOTE
MONITORING
DEVICE

STATUS
MONITORING
DEVICE

SYSTEM
MANAGING
DEVICE

SERVICING
PLANNING
DEVICE

REMOTE
MONITORING
DATABASE

STATUS
MONITORING
DATABASE

COMPONENT
SERVICING
DATABASE

PREDICTED
LIFESPAN
DATABASE

METEOROLOGICAL
INFORMATION
DATABASE

SERVICING
INFORMATION
DATABASE

SERVICING COST
DATABASE

LD DATABASE

# FIG. 2

REMOTE MONITORING DEVICE 16

# FIG. 3

```
            ┌─────────────┐
            │    START    │
            └──────┬──────┘
                   │
                   ▼
      ┌──────────────────────────┐
      │   DETECT STATUS OF       │── S100
      │   MAIN COMPONENTS        │
      └────────────┬─────────────┘
                   │
                   ▼
      ┌──────────────────────────┐
      │   STORE DATA IN REMOTE    │── S102
      │   MONITORING DEVICE       │
      └────────────┬─────────────┘
                   │
                   ▼
      ┌──────────────────────────┐
      │   CHECK COMPONENTS USING  │── S104
      │   STATUS MONITORING DEVICE│
      └────────────┬─────────────┘
                   │
                   ▼
      ┌──────────────────────────┐
      │ PREDICT LIFESPAN OF       │── S106
      │ COMPONENTS USING          │
      │ SYSTEM MANAGING DEVICE    │
      └────────────┬─────────────┘
                   │
                   ▼          S108
        NO    ╱─────────────╲
       ◄──────   ARE          
              ╲ THERE COMPONENTS NEEDING ╱
               ╲  SERVICING?  ╱
                ╲───────────╱
                   │ YES
                   ▼
      ┌──────────────────────────┐
      │ SERVICING-TIMING SELECTING│
      │ PROCESS IS PERFORMED BY   │── S110
      │ SERVICING PLANNING DEVICE │
      └────────────┬─────────────┘
                   │
                   ▼
            ┌─────────────┐
            │     END     │
            └─────────────┘
```

# FIG. 4A

(N:ROTATION SPEED)

# FIG. 4B

# FIG. 4C

# FIG. 5

EP 2 685 097 A1

# FIG. 6

```
        ┌──────────┐
        │  START   │
        └──────────┘
             │
             ▼
┌───────────────────────────┐
│   MAKE MULTIPLE SERVICING  │────S200
│           PLANS            │
└───────────────────────────┘
             │
             ▼
┌───────────────────────────┐
│   CALCULATE SERVICING COST │────S202
└───────────────────────────┘
             │
             ▼
┌───────────────────────────┐
│    CALCULATE LIQUIDATED    │────S204
│        DAMAGE COST         │
└───────────────────────────┘
             │
             ▼
┌───────────────────────────┐
│    CALCULATE TOTAL COST    │────S206
└───────────────────────────┘
             │
             ▼
┌───────────────────────────┐
│    SELECT SERVICING PLAN   │────S208
└───────────────────────────┘
             │
             ▼
┌───────────────────────────┐
│   OUTPUT SELECTION RESULT  │────S210
└───────────────────────────┘
             │
             ▼
        ┌──────────┐
        │   END    │
        └──────────┘
```

# FIG. 7

| | TIME FRAME | | | | | |
|---|---|---|---|---|---|---|
| | 0~4 | 4~8 | 8~12 | 12~16 | 16~20 | 20~24 |
| JANUARY | 11.6% | 11.6% | 34.8% | 46.5% | 19.4% | 15.5% |
| FEBRUARY | 25.7% | 25.7% | 64.3% | 68.6% | 51.4% | 21.4% |
| MARCH | 15.5% | 23.2% | 54.2% | 58.1% | 65.8% | 31.0% |
| APRIL | 28.0% | 28.0% | 64.0% | 80.0% | 96.0% | 36.0% |
| MAY | 20.0% | 28.0% | 32.0% | 20.0% | 32.0% | 28.0% |
| JUNE | 0.0% | 0.0% | 0.0% | 0.0% | 16.0% | 4.0% |
| JULY | 11.6% | 0.0% | 11.6% | 7.7% | 15.5% | 0.0% |
| AUGUST | 0.0% | 0.0% | 11.6% | 38.7% | 31.0% | 11.6% |
| SEPTEMBER | 4.0% | 12.0% | 20.0% | 24.0% | 20.0% | 12.0% |
| OCTOBER | 23.2% | 11.6% | 38.7% | 50.3% | 42.6% | 19.4% |
| NOVEMBER | 8.0% | 8.0% | 4.0% | 16.0% | 28.0% | 12.0% |
| DECEMBER | 11.6% | 7.7% | 19.4% | 31.0% | 19.4% | 11.6% |

FIG. 8

| STANDARD STEPS | NUMBER OF CREWS | NUMBER OF PEOPLE (PER CREW) | NUMBER OF DAYS (PER COMPONENT) | WORK LIMITATIONS |
|---|---|---|---|---|
| Y (Yard) | 1 CREW | 3 | 1 | NONE |
| P (Precedence) | 2 CREWS | 4 | 2 | WIND SPEED OF 10 m/sec OR LOWER |
| C (Crane) | 2 CREWS | 6 | 2 | WIND SPEED OF 5 m/sec OR LOWER |
| R (Return to Service) | 3 CREWS | 4 | 3 | WIND SPEED OF 5 m/sec OR LOWER ONLY WHEN PERFORMING CENTERING |

FIG. 9

EP 2 685 097 A1

| | 7/1 | 7/2 | 7/3 | 7/4 | 7/5 | 7/6 | 7/7 | 7/8 | 7/9 | 7/10 | 7/11 | 7/12 | 7/13 | 7/14 | 7/15 | 7/16 | 7/17 |
|---|---|---|---|---|---|---|---|---|---|---|---|---|---|---|---|---|---|
| | THU | FRI | SAT | SUN | MON | TUE | WED | THU | FRI | SAT | SUN | MON | TUE | WED | THU | FRI | SAT |
| COMPONENT 1 | Y C1 | P C1 | P C1 | | C C1 | C C1 | R C1 | R C1 | R C1 | | | | | | | | |
| COMPONENT 2 | | | Y C1 | | P C1 | P C1 | C C1 | C C1 | R C3 | R C3 | | R C3 | | | | | |
| COMPONENT 3 | | | | | | Y C1 | P C1 | P C1 | C C1 | C C1 | | R C2 | R C2 | R C2 | | | |
| COMPONENT 4 | | | | | | | | Y C1 | P C1 | P C1 | | C C1 | C C1 | R C1 | R C1 | R C1 | |
| ⋮ | | | | | | | | | | | | | | | | | |
| COMPONENT w | | Y C1 | P C1 | | P C2 | C C2 | C C2 | R C2 | R C2 | R C2 | | | | | | | |
| COMPONENT x | | | | | Y C1 | P C2 | P C2 | C C2 | C C2 | R C1 | | R C1 | R C1 | | | | |
| COMPONENT y | | | | | | | Y C1 | P C2 | P C2 | C C2 | | C C2 | R C3 | R C3 | R C3 | | |
| COMPONENT z | | | | | | | | | Y C1 | P C2 | | P C2 | C C2 | C C2 | R C2 | R C2 | R C2 |

| INTERNATIONAL SEARCH REPORT | International application No. |
|---|---|
| | PCT/JP2011/080438 |

**A. CLASSIFICATION OF SUBJECT MATTER**
*F03D7/04*(2006.01)i

According to International Patent Classification (IPC) or to both national classification and IPC

**B. FIELDS SEARCHED**

Minimum documentation searched (classification system followed by classification symbols)
F03D7/04, G06Q50/08, G06Q50/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-159710 A  (NTN Corp.), 22 July 2010 (22.07.2010), paragraphs [0018] to [0027]; fig. 1 to 3 (Family: none) | 1-5 |
| A | JP 11-085266 A  (Shin Caterpillar Mitsubishi Ltd.), 30 March 1999 (30.03.1999), paragraphs [0038] to [0041]; fig. 9 (Family: none) | 1-5 |
| A | JP 2009-237988 A  (Computer System Technology Co., Ltd.), 15 October 2009 (15.10.2009), paragraph [0050] (Family: none) | 1-5 |

☒ Further documents are listed in the continuation of Box C.　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 March, 2012 (30.03.12) | 10 April, 2012 (10.04.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

| INTERNATIONAL SEARCH REPORT | International application No. |
|---|---|
| | PCT/JP2011/080438 |

**C (Continuation). DOCUMENTS CONSIDERED TO BE RELEVANT**

| Category* | Citation of document, with indication, where appropriate, of the relevant passages | Relevant to claim No. |
|---|---|---|
| A | JP 2002-349413 A (Mitsubishi Electric Corp.), 04 December 2002 (04.12.2002), paragraphs [0042] to [0045] (Family: none) | 1-5 |

Form PCT/ISA/210 (continuation of second sheet) (July 2009)

**EP 2 685 097 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006342766 A